# EUROPEAN PATENT SPECIFICATION

(11) **EP 0 444 741 B1**
(45) Date of publication and mention of the grant of the patent: **18.01.1995**
(21) Application number: 91200368.8
(22) Date of filing: 20.02.1991
(51) Int. Cl.: C08G 59/42, C09D 163/00, C09D 5/03

(54) **Glycidylester-anhydride adducts, curing of epoxy resin powder coatings**
Glycidylester-Anhydridaddukte, Härtung von Pulverbeschichtungszusammensetzungen auf der Basis von Epoxydharzen
Produits d'addition d'un ester glycidylique et d'un anhydride, durcissement de revêtement sous forme de poudre à base de résine époxyde

(30) Priority: 22.02.1990 GB 9004013
(43) Date of publication of application: 04.09.1991
(73) Proprietor: SHELL INTERNATIONALE RESEARCH MAATSCHAPPIJ B.V., 2596 HR Den Haag (NL)
(72) Inventor: Kooijmans, Petrus Gerardus, NL-1031 CM Amsterdam (NL); Van der Mark, Johannes Maria c/o Shell Res.B.V., NL-1031 CM Amsterdam (NL); Karzijn, Willem, B-1348 Ottignies Louvain-la Neuve (BE)

(56) References cited:
- DE-A- 2 558 723
- US-A- 3 548 026
- US-A- 4 195 004

## Description

The present invention is concerned with adducts of a defined glycidylester of an aliphatic monocarboxylic acid and an anhydride of a defined trihydric aromatic carboxylic acid.

The present invention is likewise concerned with the use of such adducts as agents for the curing of epoxy resins, particularly epoxy resin powder coating systems.

Glycidyl esters of alpha-branched aliphatic monocarboxylic acids with 9 to 11 carbon atoms are known commercial products. Their use in polyester powder coating systems has been disclosed in DE-A-2558723. However, when applied in curing systems based upon epoxy resin powder coatings, they do not meet the requirement of having an adequate melting point, i.e. they melt below 65 °C, which hampers the envisaged commercialization for that purpose.

The present invention centres around the finding that oligomeric adducts of trimellitic anhydride and the glycidylester of pivalic acid can be prepared to provide melting points within the range of from 80 to 110 °C. Therefore, these adducts have the potential of opening a new market in epoxy resin powder coatings.

The Applicants now claim compounds having the formula: 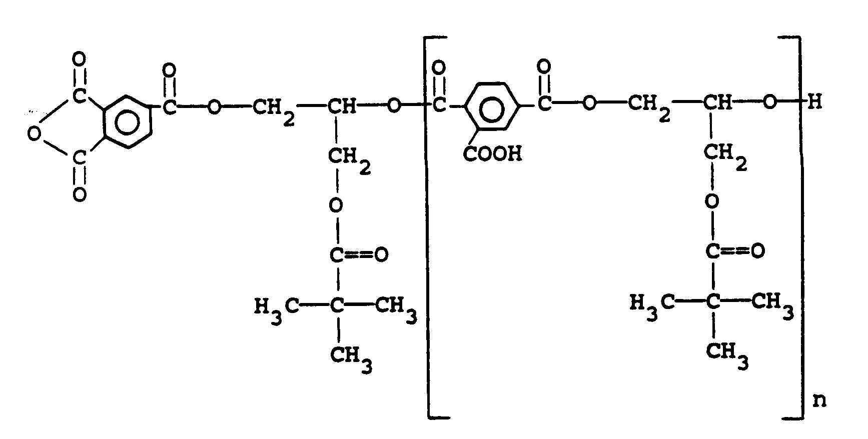
in which the value of n is such that the compound has an acid value of from 2.4 to 2.8 meq.g⁻¹ and a melting point of from 80 to 110 °C. Typical values of n are within the range of from 3 to 8, preferably 4 to 6.

The compounds of this invention are obtainable by any known preparation method. Each of the starting materials trimellitic anhydride and the glycidylester of pivalic acid are known per se.

The use of the oligomeric adducts as curing agents for epoxy resins generally and as curing agents for epoxy resin powder coatings particularly will present no problem to the average expert. In addition to epoxy resin based powder coatings, solvent-borne lacquers or stoving enamels can be cured with the novel adducts as well.

Suitable epoxy resins are preferably selected from the multitude of commercially available polyglycidyl ethers of polyhydric phenols, most preferred are the diglycidyl ethers of dihydric aromatic phenols, particularly 2,2-di(4-hydroxyphenyl)propane. A good choice would be EPIKOTE 1055 (EPIKOTE is a Trade Mark).

The curing of the epoxy resins with the novel adducts will normally proceed via prolonged heating at a temperature of at least 90 °C, preferably at least 120 °C.

### Example

173 g of the glycidylester of pivalic acid were reacted with 192 g of trimellitic anhydride in 156 g of methylethylketone and 0.9 g benzyldimethylamine catalyst at 70 to 90 °C. The reaction was continued until the epoxy group content of the solid in the reaction mixture had decreased to 0.05 eq.kg⁻¹ (4 hours reacting).

The oligomeric adduct had a m.pt. range of 80 to 110 °C and an acid value of 2.65 eq.kg⁻¹; M̅_{z} was 6700 and M̅_{w}.Mₙ⁻¹ was 2.08, as determined by GPC analysis.

The adduct was evaluated in the curing of an EPIKOTE 1055 solvent-borne lacquer. The amount of adduct was stoichiometric, the solvent was butyloxitol, 0.5 %w catalyst AMC-2 (ex AEROJET GENERAL, Inc.) was employed as curing accelerator.

The lacquer was applied in a film thickness of 20 microns by bar coating on bare steel panels. Stoving for 20 minutes was effected at 120 °C, 140 °C and 160 °C respectively.

| | | | |
|---|---|---|---|
| stoving temperature: | 120 °C | 140 °C | 160 °C |
| MEK resistance, double rubs | <10 | 50-80 | 100 |
| Gloss Gardner, 45 °C | 87 | 95 | 95 |
| Koenig hardness, sec | 148 | 158 | 156 |
| Direct impact, (inch/lbs) mm/g | <(10) 0,56 | >(80) 4,5 | >(80) 4,5 |
| Reverse impact, (inch/lbs) mm/g | <(10) 0,56 | >(80) 4,5 | >(80) 4,5 |

## Claims (Claims for the following Contracting State(s): BE, CH, DE, FR, GB, IT, LI, NL, SE)

1. Compounds having the formula: 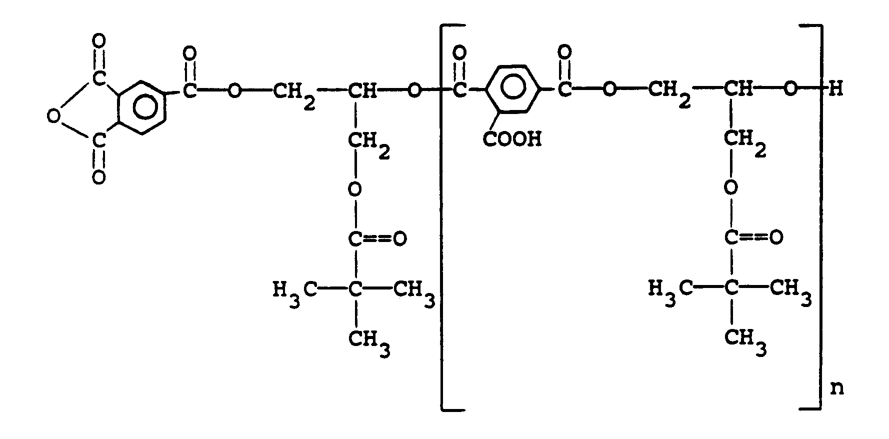 in which the value of n is such that the compound has an acid value of from 2.4 to 2.8 meq.g⁻¹ and a melting point of from 80 to 110 °C.

2. A process for curing an epoxy resin with a curing agent, characterized in that the curing agent is a compound as claimed in claim 1.

3. A process according to claim 2 wherein the epoxy resin is an epoxy resin powder coating.

## Claims (Claims for the following Contracting State(s): ES)

1. A process for the preparation of a compound of the general formula 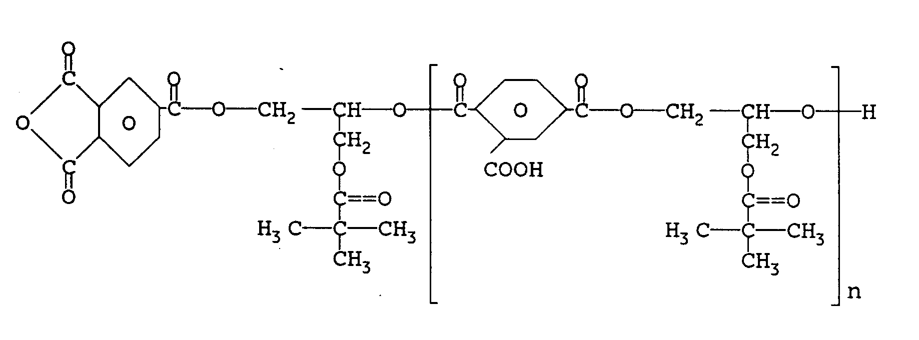 in which the value of n is such that the compound has an acid value of from 2.4 to 2.8 meq.g⁻¹ and a melting point of from 80 to 110 °C, by reacting n+1 moles of the glycidylester of pivalic acid with n+1 moles of trimellitic anhydride.

2. A process for curing an epoxy resin with a curing agent, characterized in that the curing agent is a compound prepared according to the process of claim 1.

3. A process according to claim 2 wherein the epoxy resin is epoxy resin powder coating.

## Patentansprüche (Patentansprüche für folgende(n) Vertragsstaat(en): BE, CH, DE, FR, GB, IT, LI, NL, SE)

1. Verbindungen der nachstehenden Formel 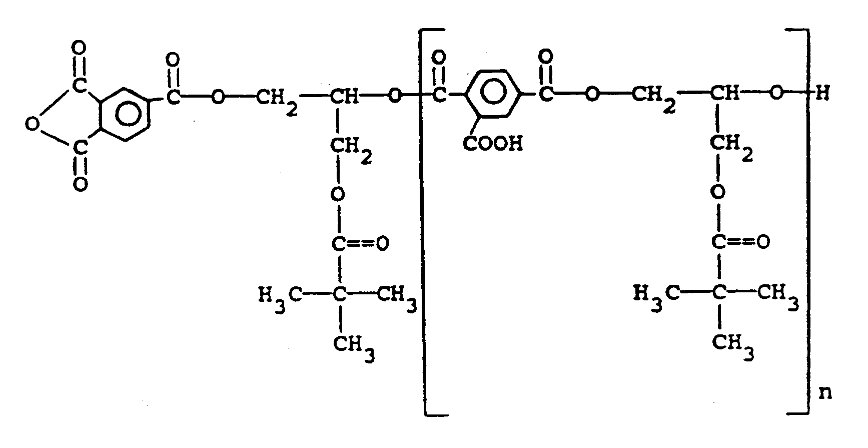 in welcher n einen Wert derart hat, daß die Verbindung einen Säurewert im Bereich von 2,4 bis 2,8 Milliäquivalente/g und einen Schmelzpunkt im Bereich von 80°C bis 110°C aufweist.

2. Ein Verfahren zum Härten eines Epoxyharzes mit einem Härtungsmittel dadurch gekennzeichnet, daß das Härtungsmittel eine Verbindung ist, wie in Anspruch 1 beansprucht.

3. Ein Verfahren gemäß Anspruch 2, in welchem das Epoxyharz eine Epoxyharzpulverbeschichtung ist.

## Patentansprüche (Patentansprüche für folgende(n) Vertragsstaat(en): ES)

1. Ein Verfahren zur Herstellung einer Verbindung der allgemeinen Formel 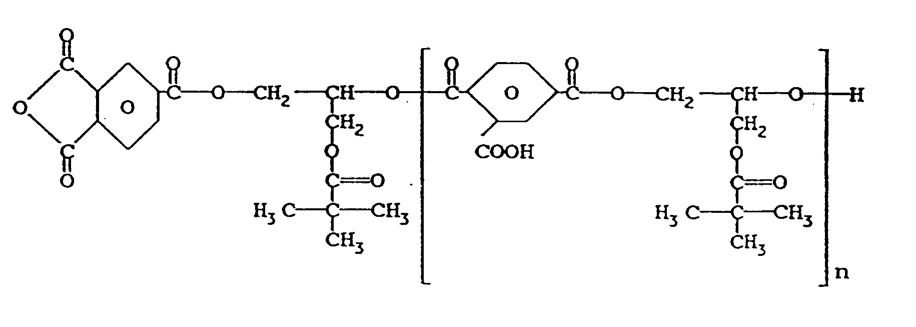 in welcher n einen Wert derart hat, daß die Verbindung einen Säurewert im Bereich von 2,4 bis 2,8 Milliäquivalente/g und einen Schmelzpunkt im Bereich von 80°C bis 110°C aufweist, durch Umsetzen von n+1 Molen des Glycidylesters von Pivalinsäure mit n+1 Molen Trimellitsäureanhydrid.

2. Ein Verfahren zum Härten eines Epoxyharzes mit einem Härtungsmittel dadurch gekennzeichnet, daß das Härtungsmittel eine gemäß dem Verfahren von Anspruch 1 hergestellte Verbindung ist.

3. Ein Verfahren gemäß Anspruch 2 in welchem das Epoxyharz eine Epoxyharzpulverbeschichtung ist.

## Revendications (Revendications pour l'(les) Etat(s) contractant(s) suivant(s): BE, CH, DE, FR, GB, IT, LI, NL, SE)

1. Composés ayant la formule : 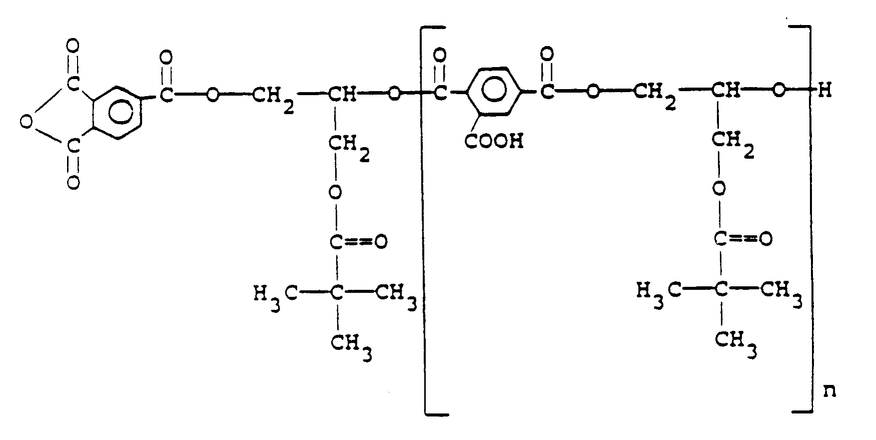 dans laquelle la valeur de n est telle que le composé ait un indice d'acide compris entre 2,4 et 2,8 méq.g⁻¹ et un point de fusion compris entre 80 et 110°C.

2. Un procédé pour durcir une résine époxy avec un agent de durcissement, caractérisé en ce que l'agent de durcissement est un composé selon la revendication 1.

3. Un procédé selon la revendication 2, dans lequel la résine époxy est un revêtement sous forme de poudre à base de résine époxy.

## Revendications (Revendications pour l'(les) Etat(s) contractant(s) suivant(s): ES)

1. Un procédé pour la préparation d'un composé de la formule générale 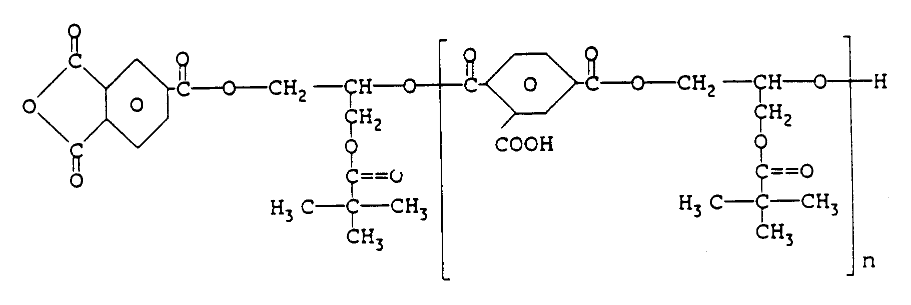 dans laquelle la valeur de n est telle que le composé ait un indice d'acide compris entre 2,4 et 2,8 méq.g⁻¹ et un point de fusion compris entre 80 et 110°C, en faisant réagir n + 1 moles de l'ester glycidique d'acide pivalique avec n + 1 moles d'anhydride trimellitique.

2. Un procédé pour durcir une résine époxy avec un agent de durcissement, caractérisé en ce que l'agent de durcissement est un composé préparé selon le procédé de la revendication 1.

3. Un procédé selon la revendication 2, dans lequel la résine époxy est un revêtement sous forme de poudre à base de résine époxy.
